# EUROPEAN PATENT APPLICATION

(11) **EP 1 381 047 A1**
(43) Date of publication of application: **14.01.2004**
(21) Application number: 03014964.5
(22) Date of filing: 01.07.2003
(51) Int. Cl.: G11B 20/18

(54) **Information recording medium, information recording apparatus and information recording method**

(30) Priority: 02.07.2002 JP 2002193388
(71) Applicant: Kabushiki Kaisha Toshiba, Tokyo (JP)
(72) Inventor: Takahashi, Hideki, c/o Toshiba Corporation, Minato-ku, Tokyo 105-8001 (JP); Ando, Hideo, c/o Toshiba Corporation, Minato-ku, Tokyo 105-8001 (JP)
(74) Representative: Henkel, Feiler, Hänzel

(57) **Abstract**

An information storage medium has a user area (UA) used to store user data, a defect management area (DMA) used to store defect information associated with defects on the user area, and an overwrite management area (DMA) used to store overwrite information associated with an overwrite count for the defect management area.

## Description

The present invention relates to an information recording medium which comprises a defect management area for storing defect management information. The present invention also relates to an information recording apparatus for recording defect information on an information recording medium. The present invention further relates to an information recording method for recording defect information on an information recording medium.

An information storage medium such as an optical disk or the like has a user area used to store user data, and has a mechanism for compensating for defects generated in this user area. Such mechanism is called a replacement process. An area that manages information associated with this replacement process, i.e., defect management information, is called a DMA (Defect Management Area).

Of information recording media, a DVD-RAM allows 100,000 or more overwrite accesses. Even when the DMA of such medium with very high overwrite durability undergoes several ten thousand overwrite accesses, the reliability of the DMA never wavers.

Jpn. Pat. Appln. KOKAI Publication No. 9-213011 discloses an optical disk having a plurality of DMAs. By allocating a plurality of DMAs, the DMA reliability can be improved.

However, in case of an information recording media having a relatively small allowable overwrite count (several ten to several thousand times), overwrite accesses to a DMA of such medium pose a problem.
That is, the DMA of such medium is easily damaged by overwrite accesses.

This problem cannot be solved even by a technique disclosed in Jpn. Pat. Appln. KOKAI Publication No. 9-213011. That is, even when a plurality of DMAs are allocated, since respective DMAs undergo overwrite accesses at the same time, if one DMA is damaged by overwrite accesses, other DMAs are also damaged.

Each DMA stores defect management information, as described above, and if the DMA is damaged, defect management information cannot be read out from the DMA. As a result, the medium itself can no longer be used. Hence, it is demanded to improve the overwrite durability of the DMA.

It is an object of the present invention to provide an information storage medium, information recording apparatus, and information recording method, which allow highly reliable defect management even on a medium with relatively low overwrite durability.

An information storage medium according to an aspect of the present invention comprises a user area to store user data, a defect management area to store defect information associated with defects on the user area, and an overwrite management area to store overwrite information associated with an overwrite count for the defect management area.

An aspect of the present invention is directed to an information recording apparatus for recording information on an information recording medium, which has a user area to store user data, a defect management area to store defect information associated with defects on the user area, and an overwrite management area to store overwrite information associated with an overwrite count for the defect management area, comprising: a recording unit to record the user data, the defect information, and the overwrite information; and a recording control unit to control the recording unit to record the defect information on the defect management area, and to record the overwrite information on the overwrite management area in correspondence with the recording operation.

An aspect of the present invention is directed to an information recording method for recording information on an information recording medium, which has a user area to store user data, a defect management area to store defect information associated with defects on the user area, and an overwrite management area to store overwrite information associated with an overwrite count for the defect management area, comprising: recording the defect information on the defect management area, and recording the overwrite information on the overwrite management area in correspondence with the recording operation.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an outline of the data structure of an information storage medium (optical disk) according to an embodiment of the present invention;
FIG. 2 is a flow chart showing an example of a replacement process;
FIG. 3 shows an example of a schematic data structure of a DMA allocated on the information storage medium;
FIG. 4 shows an example of contents described in a first sector of a DDS/PDL block contained in the DMA;
FIG. 5 shows an example of contents described in an SDL block contained in the DMA;
FIG. 6 shows an example of the data structure of one of a plurality of SDL entries contained in an SDL;
FIG. 7 is a state transition chart for explaining an example of a method of using a DMA sequence;
FIG. 8 shows the relationship (part 1) between the states of counters allocated in DMAs and DMA transition;
FIG. 9 shows the relationship (part 2) between the states of counters allocated in DMAs and DMA transition;
FIG. 10 is a flow chart showing an example of a sequence for searching for a currently active DMA;
FIG. 11 is a flow chart for explaining an example of DMA registration and update processes;
FIG. 12 is a state transition chart for explaining an example of a method of using a plurality of DMA sequences;
FIG. 13 is a view for explaining an example of lead-in and lead-out areas where a plurality of DMA sequences are allocated;
FIG. 14 is a flow chart showing an example of a reproduction process of a medium on which a plurality of DMA sequences are allocated; and
FIG. 15 is a schematic block diagram showing the arrangement of an information recording/reproduction apparatus according to an embodiment of the present invention.

A preferred embodiment of the present invention will be described hereinafter with reference to the accompanying drawings.

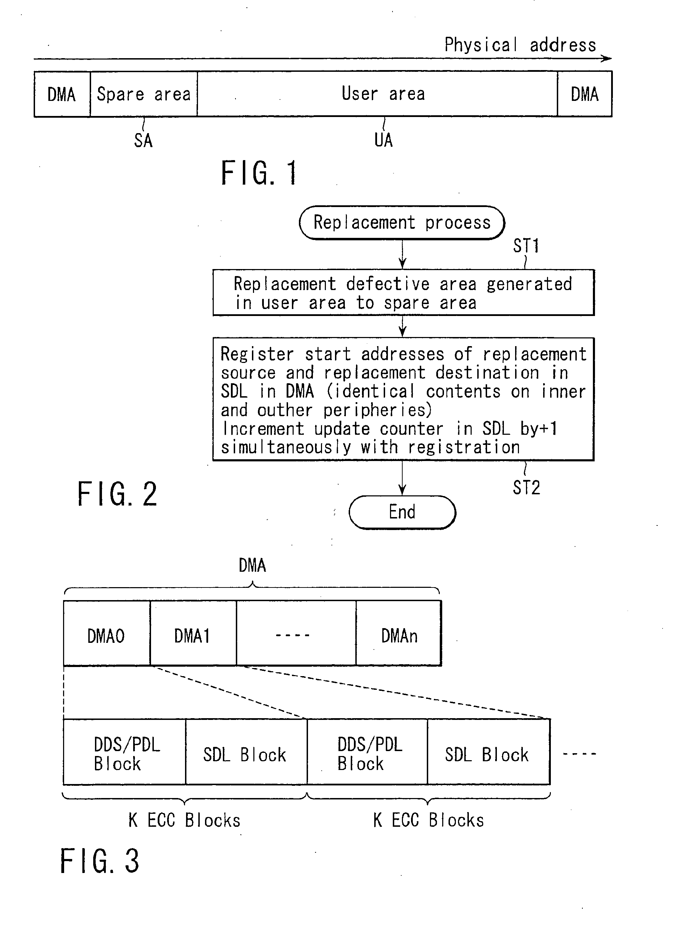

FIG. 1 shows an outline of the data structure of an information storage medium (optical disk) according to an embodiment of the present invention. As shown in FIG. 1, an information storage medium has a data structure which comprises a spare area SA and user area UA between DMAs. Note that the data structure shown in FIG. 1 is merely an example of that of the information storage medium of the present invention, and the data structure of the information storage medium of the present invention is not limited to such specific data structure.

The user area UA is used to store user data. The spare area SA is an area where data to be recorded on a defective area present within the user area is replacement-recorded. The defective area is an area for respective ECC (Error Correction Code) blocks.
That is, data for respective ECC blocks is replacement-recorded on the spare area SA. As will be described later, each DMA comprises a DMA counter (overwrite management area). The overwrite count on the DMA is reflected on the count value of the DMA counter.

FIG. 2 is a flow chart showing a replacement process. As shown in FIG. 2, data to be recorded on a defective area generated in the user area is replacement-recorded on the spare area SA (ST1).
In addition, the start addresses of the replacement source (defective area) and replacement destination (a predetermined area in the spare area SA) are registered in an SDL (Secondary Defect List) in each DMA. The DMAs are allocated on the inner and outer peripheries of the information recording medium, as shown in, e.g., FIG. 1, and identical data is registered in the SDLs of both the DMAs. When information is registered in each SDL, an update counter of the SDL is incremented (+1) (ST2).

Conventionally, a DMA is allocated at a fixed physical address on a medium. Furthermore, in order to improve the fault tolerance of the DMA, DMAs that store identical contents are allocated at a plurality of locations on the medium. For example, in case of a DVD-RAM, DMAs are allocated at two locations on the innermost periphery and two locations on the outermost periphery, i.e., a total of four locations, and these four DMAs record identical contents.

FIG. 3 is a schematic view showing the data structure of DMAs allocated on the information storage medium of the present invention. As shown in FIG. 3, the information storage medium has a plurality of DMAs, each of which is made up of DDS/PDL blocks and SDL blocks. "PDL" is an abbreviation for Primary Defect List. Each of the DDS/PDL and SDL blocks corresponds to one ECC block (= 32KB).

In order to improve the fault tolerance of DMAs, when an active DMA has weakened, the information storage medium according to an aspect of the present invention is defined to shift defect management information stored in that DMA to a new DMA. It is determined that the DMA has weakened when the overwrite count of this DMA approaches an allowable overwrite count of the medium having the DMA, or when defects on this DMA increase, and error correction is more likely to fail.

Each DMA has a size of an integer multiple of that of an ECC block as a true recording unit in a drive. On a DVD-RAM, one ECC block consists of 16 sectors, and the size of one ECC block is 32KB. A PDL is a primary defect registration list, and an SDL is a secondary defect registration list. The PDL registers defect information associated with defects found in certification executed upon formatting a medium, i.e., primary defects. By contrast, the SDL registers defect information associated with defects found upon normal recording (e.g., upon recording user data), i.e., secondary defects. The defect management information contains a replacement source address and replacement destination address. When the sizes of these lists increase, the number of defects that can be registered increase. DMA0 to DMAn are sequentially allocated, and are used in turn from DMA0.

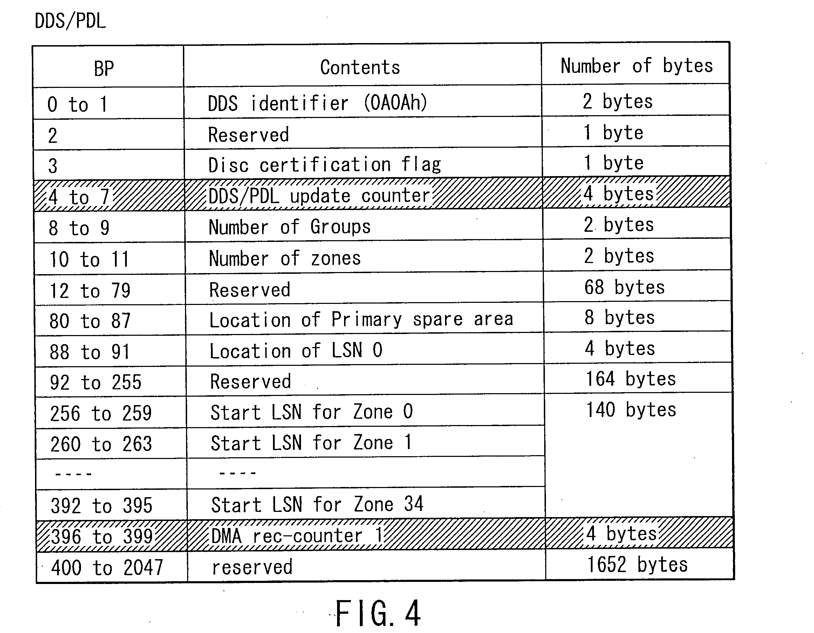

FIG. 4 shows an example of contents described in the first sector of the DDS/PDL block contained in the DMA. On a predetermined area of the DDS/PDL block, a 4-byte DDS/PDL update counter, 4-byte DMA rec-counter 1, and the like are allocated.

Every time the contents of the DDS/PDL block are updated, the DDS/PDL update counter is incremented (+1). The DMA rec-counter 1 is counted up when the DDS/PDL block is rewritten. At the time of initialization (first time) of the medium, zero is set in all DMA rec-counters 1. A method of using this counter will be described later.

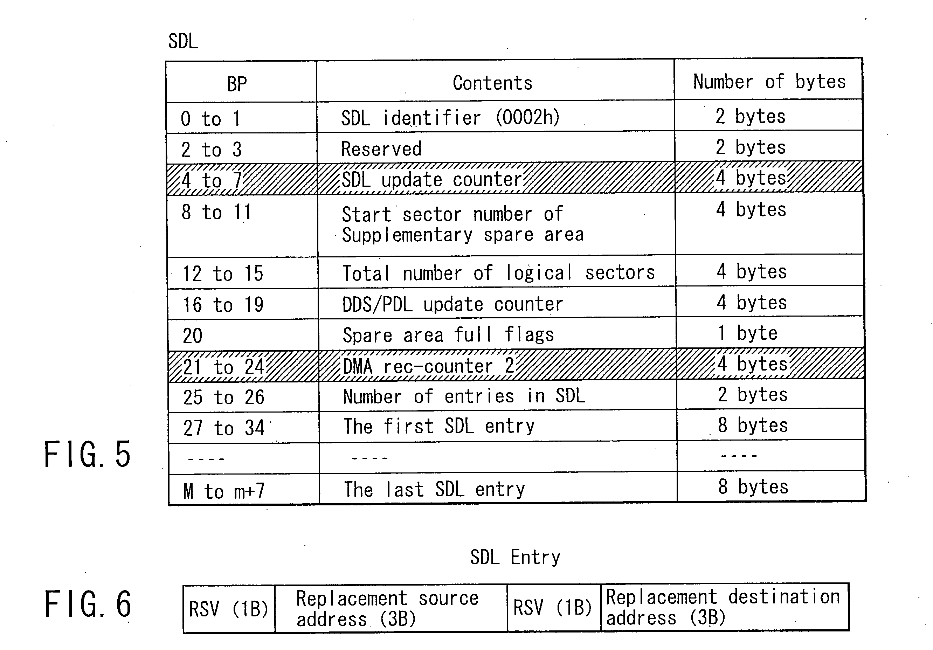

FIG. 5 shows an example of contents described in the SDL block contained in the DMA. On a predetermined area of the SDL block, a 4-byte SDL update counter, 4-byte DMA rec-counter 2, and the like are allocated.

As in the DDS/PDL block, every time the contents of the SDL block are updated, the SDL update counter is incremented (+1). The DMA rec-counter 2 is counted up when the SDL block is rewritten. The SDL describes management information associated with secondary defects. At the time of initialization (first time) of the medium, zero is set in all DMA rec-counters 2.
A method of using this counter will be described later.

FIG. 6 shows an example of the data structure of one of a plurality of SDL entries contained in the SDL. One SDL entry consists of, e.g., 8 bytes. On one SDL entry, a 3-byte field for describing the replacement source address, and a 3-byte field for describing the replacement destination address are allocated.
A replacement process is done for, e.g., respective ECC blocks. The replacement source address field and replacement destination address field respectively register the addresses of first sectors contained in respective ECC blocks. In the example of the data structure shown in FIG. 6, 3-byte fields are assigned to designate addresses. However, when a medium has a larger capacity (larger address spaces), the address designation field size increases.

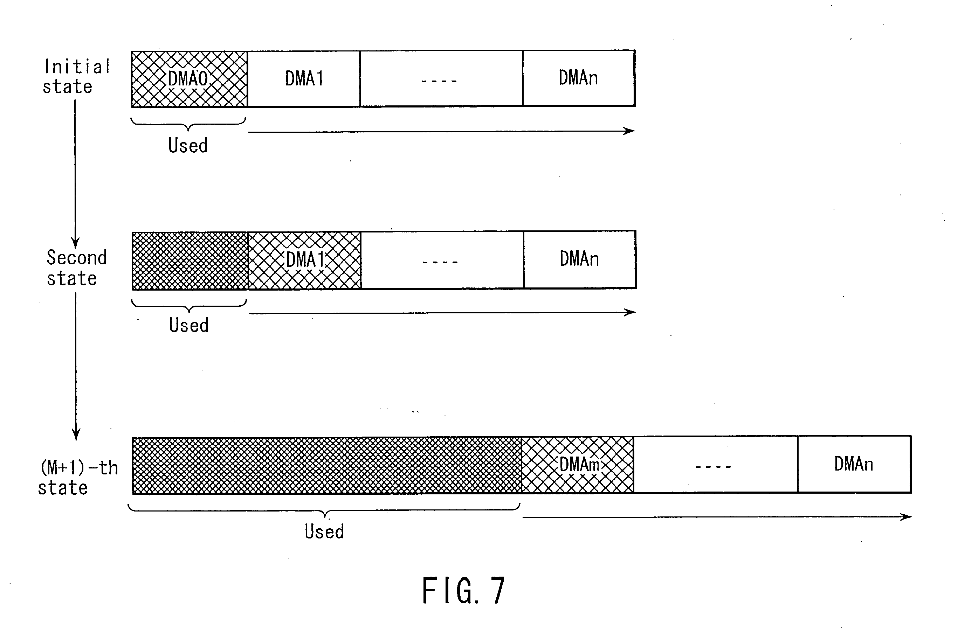

FIG. 7 is a state transition chart for explaining the method of using a DMA sequence. The DMA sequence comprises (n + 1) DMAs from DMA0 to DMAn. If DMA0 is a currently active DMA, DMA1 to DMAn are auxiliary DMAs.

A plurality of DMAs included in the DMA sequence are used in turn from DMA0. In an initial state, DMA0 is used, and DMA1 and subsequent DMAs are not used. When defects on DMA0 increase, or when the overwrite count has exceeded a prescribed value, DMA0 becomes a used area, and defect management information stored in DMA0 is replaced to and recorded on DMA1. Likewise, using DMAs in turn, even when each DMA has suffered defects or overwrite damages, the medium can be continuously used without breaking down as a system.

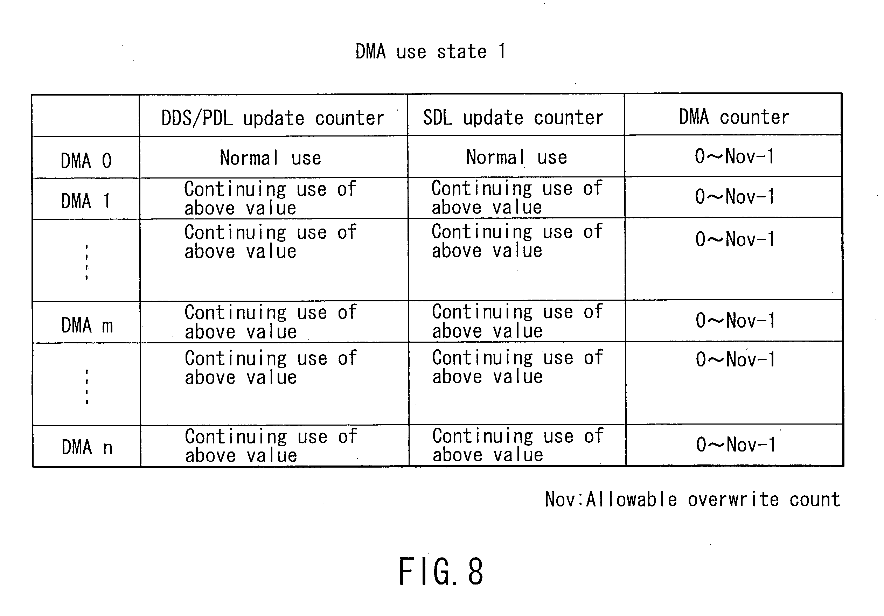

FIG. 8 shows the relationship (part 1) between the states of counters allocated in DMAs and DMA transition. The DDS/PDL update counter and SDL update counter shown in FIG. 8 are cumulative counters which cumulatively count even when DMA transition has occurred (even after transition of DMA0 → DMA1).

As shown in FIG. 8, a DMA counter is allocated on a predetermined area of a DMA. This DMA counter is incremented when the DMA is rewritten. That is, a larger one of the count value of the DMA rec-counter 1 of the DDS/PDL block contained in the DMA and that of the DMA rec-counter 2 of the SDL block contained in the DMA is the count value of the DMA counter.

More specifically, by checking the count value of this DMA counter, the overwrite count of the currently active DMA can be detected. In other words, the count value of the DMA counter is a value indicating the level of damage that the DMA suffers upon overwrite accesses on the DMA.

The information recording/reproduction apparatus for recording information on this medium shifts the currently active DMA (e.g., DmA0) to an auxiliary DMA (e.g., DMA1) within the range of the allowable overwrite count (Nov) which is determined in accordance with the characteristics of a medium. Of course, in order to fully effectively use the currently active DMA, it is desirable to use that DMA until the maximum value (Nov-1) of the DMA counter. Even when the DMA counter does not reach its maximum value, the information recording/reproduction apparatus shifts the currently active DMA to an auxiliary DMA if it detects an increase of defects on the currently active DMA. Each DMA receives a value only after it begins to use. That is, no value is input to unused DMAs. When a medium is loaded to the information recording/reproduction apparatus, the information recording/reproduction apparatus searches for a DMA in which the count values of both DMA rec-counters 1 and 2 are zero, so as to detect the location of the currently active DMA. If a DMA (e.g., DMA2) in which the count values of both DMA rec-counters 1 and 2 are zero is found, the apparatus recognizes a DMA (e.g., DmA1) immediately before the found DMA as the currently active DMA. If no DMA in which the count values of both DMA rec-counters 1 and 2 are zero is found, the apparatus recognizes the last DMA (e.g., DMAn) as the currently active DMA.

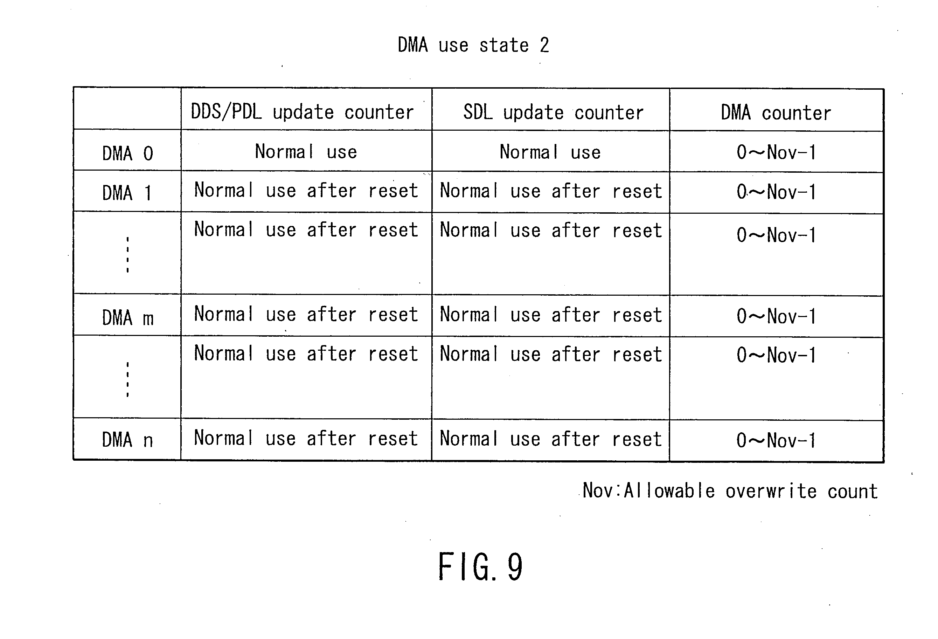

FIG. 9 shows the relationship (part 2) between the states of counters allocated in DMAs and DMA transition. The case has been explained above with reference to FIG. 8 wherein the DDS/PDL update counter and SDL update counter cumulatively count even when DMA transition has occurred. By contrast, FIG. 9 will explain a case wherein the count values of the DDS/PDL update counter and SDL update counter are reset when DMA transition has occurred (after transition of DMA0 → DMA1).

As shown in FIG. 9, a DMA counter is allocated on a predetermined area of a DMA. This DMA counter is incremented when the DMA is rewritten. That is, a larger one of the count value of the DDS/PDL update counter (DMA rec-counter 1) of the DDS/PDL block contained in the DMA and that of the SDL update counter (DMA rec-counter 2) of the SDL block contained in the DMA is the count value of the DMA counter.

In the case shown in FIG. 9, every time the DMA shifts, the DDS/PDL update counter and SDL update counter are reset. For this reason, the DDS/PDL update counter has a function equivalent to that of the DMA rec-counter 1, and the SDL update counter has a function equivalent to that of the DMA rec-counter 2. Therefore, in the case shown in FIG. 9, DMA rec-counters 1 and 2 may be omitted.

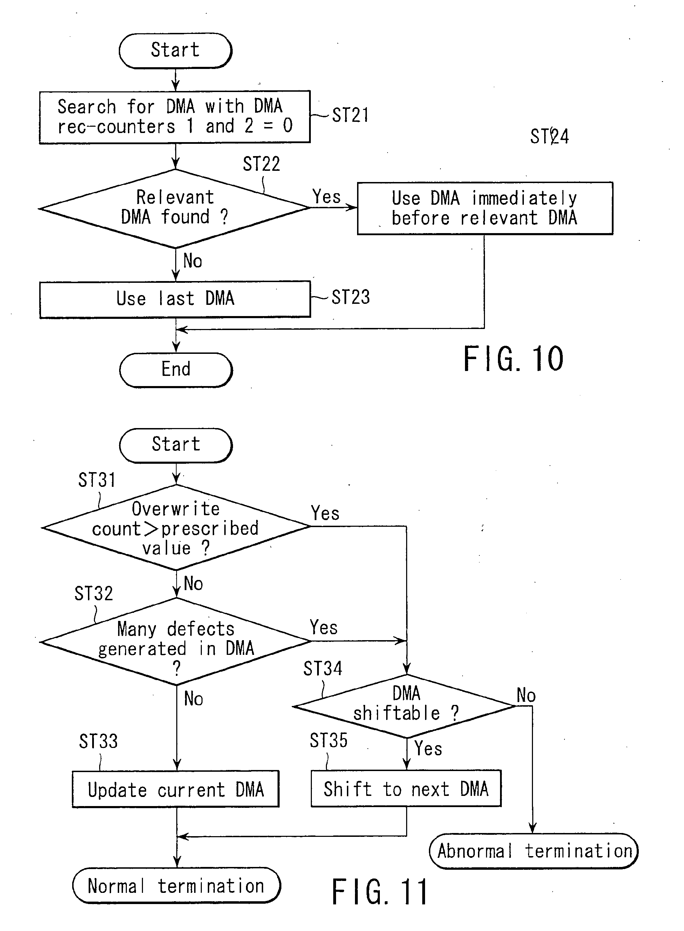

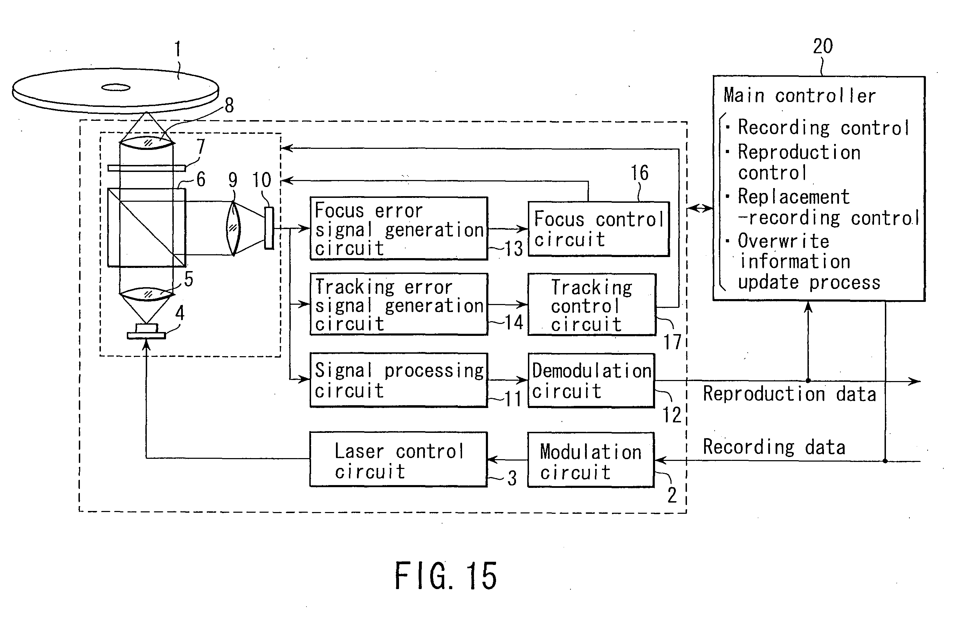

FIG. 10 is a flow chart showing the sequence for searching for the currently active DMA. The search process for searching for the currently active DMA is executed by a main controller 20 of the information recording/reproduction apparatus shown in FIG. 15.
As described above, the information storage medium of the present invention is defined to shift DMAs upon overwrite accesses and the like. Therefore, when a disk is loaded to the information recording/reproduction apparatus, the currently active DMA must be searched for. The DMA rec-counters 1 and 2 are allocated on each of DMAs (DMA0 to DMAn) on the medium. When the medium is initialized, the count values of the DMA rec-counters 1 and 2 of each DMA are set to zero. When the medium begins to use, the count values of the DMA rec-counters 1 and 2 of DMA1 are counted up. When use of the medium further continues, the count values of the DMA rec-counters 1 and 2 of DMA2 are counted up. The use order of DMA0 to DMAn is predetermined. That is, the DMAs are used in the order of DMA0 →DMA1 → DMA2 → ... → DMAn. Hence, by checking the count values of the DMA rec-counters 1 and 2 of DMA0 to DMAn, the currently active DMA can be found out.

As shown in FIG. 10, when the medium is loaded to the information recording/reproduction apparatus, the information recording/reproduction apparatus searches for a DMA in which the count values of both DMA rec-counters 1 and 2 are zero, so as to detect the location of the currently active DMA (ST21). If a DMA (e.g., DMA2) in which the count values of both DMA rec-counters 1 and 2 are zero is found (ST22, YES), the apparatus recognizes a DMA (e.g., DMA1) immediately before the found DMA as the currently active DMA (ST24). If no DMA in which the count values of both DMA rec-counters 1 and 2 are zero is found (ST22, NO), the apparatus recognizes the last DMA (e.g., DMAn) as the currently active DMA (ST23).

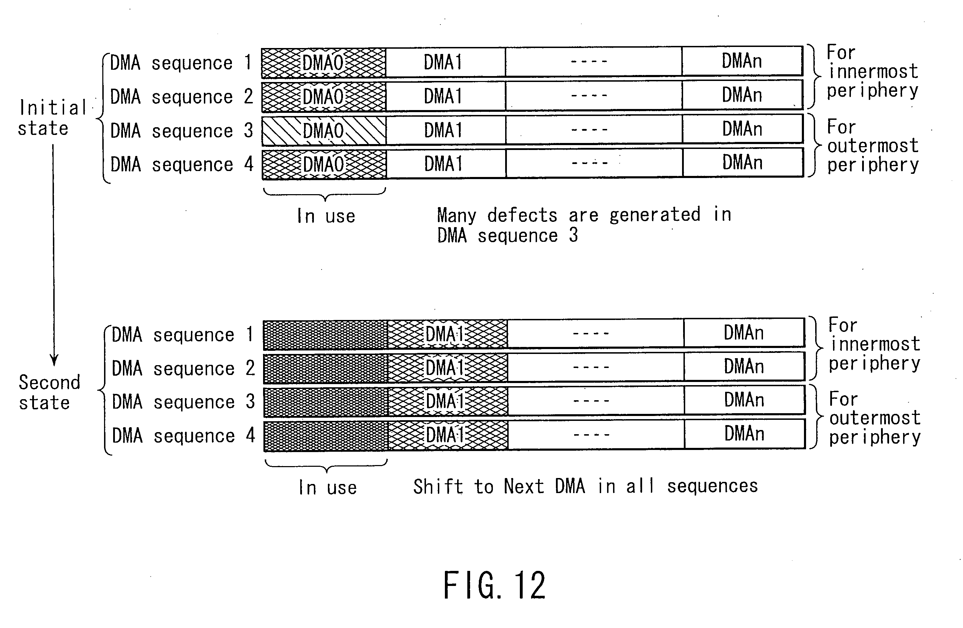

FIG. 11 is a flow chart for explaining DMA registration and update processes. The DMA registration and update processes are executed by the main controller 20 of the information recording/reproduction apparatus shown in FIG. 15. The main controller 20 checks based on the count value of the DMA counter of the DMA if the rewrite count of the currently active DMA has exceeded a prescribed value (ST31). If it is determined that the rewrite count has exceeded the prescribed value (ST31, YES), the main controller 20 confirms if defect information. stored in the currently active DMA can be shifted (if an auxiliary DMA remains). If it is determined that defect information can be shifted (ST34, YES), the main controller 20 shifts defect information stored in the currently active DMA to a DMA determined as the next shift destination (ST35). At this time, required values are taken over. For example, in the case shown in FIG. 8, the values of the DDS/PDL update counter and SDL update counter are taken over.

Even if the rewrite count is equal to or smaller than the prescribed value (ST31, NO), if the main controller 20 detects that many defects are generated in the DMA (ST32, YES), the controller 20 confirms if defect information stored in the currently active DMA can be shifted (if an auxiliary DMA remains). If it is determined that defect information can be shifted (ST34, YES), the main controller 20 shifts defect information stored in the currently active DMA to a DMA determined as the next shift destination (ST35). If it is determined that defect information cannot be shifted (ST34, NO), this process terminates abnormally.

If the rewrite count of the currently active DMA is equal to or smaller than the prescribed value (ST31, NO) and if the currently active DMA does not suffer defects (ST32, NO), the currently active DMA is updated as needed (ST33).

FIG. 12 is a state transition chart for explaining an example of a method of using a plurality of DMA sequences. As shown in FIG. 7, use of a single DMA sequence has been explained so far. That is, the case has been explained wherein one DMA sequence includes DMA0 to DMAn. In this case, use of a plurality of DMA sequences, as shown in FIG. 12, will be explained.
That is, a case will be explained wherein each of a plurality of DMA sequences includes DMA0 to DMAn.

As shown in FIG. 12, for example, an information storage medium having four DMA sequences will be explained. The four DMA sequences are allocated at different locations. For example, DMA sequences 1 and 2 are allocated on the innermost periphery of the medium, and DMA sequences 3 and 4 are allocated on the outermost periphery of the medium. Assume that many defects are generated in, e.g., DMA sequence 3 of DMA sequences 1 to 4 (initial state of FIG. 12). The main controller of the information recording/reproduction apparatus shown in FIG. 15 detects the presence of many defects. Upon detection of defects, defect management information in each of currently active DMAs (e.g., DMA0) in all the DMA sequences is shifted (undergoes) replacement recording) to the next DMA (e.g., DMA1) (second state in FIG. 12). The main controller of the information recording/reproduction apparatus shown in FIG. 15 shifts (executes replacement recording of) the defect management information.

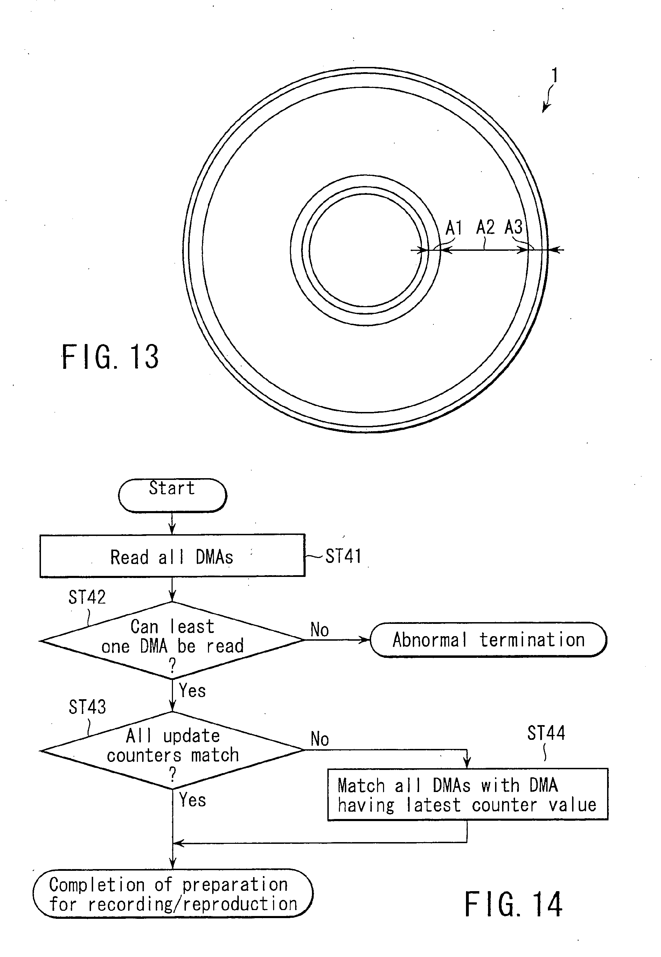

FIG. 13 is a view for explaining lead-in and lead-out areas where a plurality of DMA sequences are allocated. As shown in FIG. 13, a medium (optical disk) 1 has a lead-in area A1 on its innermost periphery, and a lead-out area A3 on its outermost periphery. Also, the medium 1 has a data area A2 between the lead-in and lead-out areas A1 and A3.
The data area A2 has a user area UA and spare area SA.

The lead-in area A1 on the innermost periphery comprises first DMA sequences (DMA sequences 1 and 2), and the lead-out area A3 on the outermost periphery comprises second DMA sequences (DMA sequences 3 and 4). In this way, by allocating the DMA sequences on the innermost and outermost peripheries, a plurality of DMA sequences are allocated at physically separated locations. As a result, DMAs become invulnerable to failures.

FIG. 14 is a flow chart of a reproduction process of a medium on which a plurality of DMA sequences are allocated. When a medium is loaded to the information recording/reproduction apparatus shown in FIG. 15, the apparatus searches all DMA sequences for currently active DMAs, and reads out defect management information from the currently active DMAs (ST41).
That is, in case of, e.g., FIG. 12, the apparatus searches DMA sequence 1 for a currently active DMA (e.g., DMA1), DMA sequence 2 for a currently active DMA (e.g., DMA1), DMA sequence 3 for a currently active DMA (e.g., DMA1), and DMA sequence 4 for a currently active DMA (.g., DMA1). The process for searching for the currently active DMA is as shown in FIG. 10.

If no defect management information can be read out from any of DMAs due to the influence of failures or the like (ST42, NO), this process terminates abnormally. If defect management information can be read out from the DMAs, the apparatus checks the count values of the DDS/PDL update counter and SDL update counter of each DMA. The currently active DMAs in the plurality of DMA sequences should record identical information. Therefore, the count values of the DDS/PDL update counters and SDL update counters of the respective DMAs should match. However, if any failure has occurred during a process of recording information on the respective DMAs in the plurality of DMA sequences in turn, some DMAs may remain unupdated.
If the currently active DMAs in the plurality of DMA sequences have different count values of the update counters (ST43, NO), the unupdated DMAs match the DMAs having the latest count values (ST44). In this way, preparation for recording/reproduction is completed.

FIG. 15 shows a schematic arrangement of the information recording/reproduction apparatus according to an embodiment of the present invention. This information recording/reproduction apparatus records user data on the aforementioned medium (optical disk) 1, and reproduces user data recorded on the medium 1. Also, this information recording/reproduction apparatus executes a replacement process as needed.

As shown in FIG. 15, the information recording/reproduction apparatus comprises a modulation circuit 2, laser control circuit 3, laser 4, collimator lens 5, polarization beam splitter (to be referred to as a PBS hereinafter) 6, quarter wave plate 7, objective lens 8, focusing lens 9, photodetector 10, signal processing circuit 11, demodulation circuit 12, focus error signal generation circuit 13, tracking error signal generation circuit 14, focus control circuit 16, tracking control circuit 17, and main controller 20.

The main controller 20 controls a drive unit.
The drive unit includes the modulation circuit 2, laser control circuit 3, laser 4, collimator lens 5, PBS 6, quarter wave plate 7, objective lens 8, focusing lens 9, photodetector 10, signal processing circuit 11, demodulation circuit 12, focus error signal generation circuit 13, tracking error signal generation circuit 14, focus control circuit 16, and tracking control circuit 17.

A data recording process of this information recording/reproduction apparatus will be described below. The data recording process is controlled by the main controller 20. Recording data (data symbol) is modulated to a predetermined channel bit sequence by the modulation circuit 2. The channel bit sequence corresponding to the recording data is converted into a laser drive waveform by the laser control circuit 3. The laser control circuit 3 pulse-drives the laser 4 to record data corresponding to a desired bit sequence on the medium 1. A recording laser beam emitted by the laser 4 is converted into collimated light by the collimator lens 5. The collimated light enters and is transmitted through the PBS 6. The beam transmitted through the PBS 6 passes through the quarter wave plate 7, and is focused on the information recording surface of the medium 1 by the objective lens 8.
The focused beam is maintained in a state wherein it can form a best small spot on the recording surface, under the focus control of the focus control circuit 16 and the tracking control of the tracking control circuit 17.

A data reproduction process of this information recording/reproduction apparatus will be described below. The data reproduction process is controlled by the main controller 20. The laser 4 emits a reproduction laser beam on the basis of a data reproduction instruction from the main controller 20. The reproduction laser beam emitted by the laser 4 is converted into collimated light by the collimator lens 5. The collimated light enters and is transmitted through the PBS 6. The beam transmitted through the PBS 6 passes through the quarter wave plate 7, and is focused on the information recording surface of the medium 1 by the objective lens 8. The focused beam is maintained in a state wherein it can form a best small spot on the recording surface, under the focus control of the focus control circuit 16 and the tracking control of the tracking control circuit 17. At this time, the reproduction laser beam that strikes the medium 1 is reflected by a reflection film or reflective recording film in the information recording surface. The reflected light is transmitted through the objective lens 8 in the reverse direction, and is converted into collimated light again. The reflected light is transmitted through the quarter wave plate 7, and is reflected by the PBS 6 since it has a plane of polarization perpendicular to the incoming light. The beam reflected by the PBS 6 is converted into convergent light by the focusing lens 9, and enters the photodetector 10. The photodetector 10 comprises, e.g., a 4-split photodetector. The light beam that has entered the photodetector 10 is photoelectrically converted into an electrical signal, which is then amplified. The amplified signal is equalized and binarized by the signal processing circuit 11, and is then supplied to the demodulation circuit 12.
The signal undergoes demodulation corresponding to a predetermined modulation method in the demodulation circuit 12, thus outputting reproduction data.

The focus error signal generation circuit 13 generates a focus error signal on the basis of some components of the electrical signal output from the photodetector 10. Likewise, the tracking error signal generation circuit 14 generates a tracking error signal on the basis of some components of the electrical signal output from the photodetector 10. The focus control circuit 16 controls focusing of a beam spot on the basis of the focus error signal. The tracking control circuit 17 controls tracking of a beam spot on the basis of the tracking error signal.

The replacement process of the main controller 20 will be described below. Upon formatting a medium, certification is executed. At this time, the main controller 20 detects defects on the medium. The main controller 20 records defect information associated with defects detected at that time, i.e., primary defects, on the PDL in the DMA of that medium. The defect management information contains a replacement source sector address, and replacement destination sector address. In normal recording, the main controller 20 also detects defects on the medium. The main controller 20 records defect information associated with defects detected at that time, i.e., secondary defects, on the SDL in the DMA of that medium. The defect management information contains the addresses of the first sectors of ECC blocks as the replacement source and destination. Based on the PDL and SDL, an access to the replacement source is considered as that to the replacement destination.
The main controller controls the search process of the currently active DMA shown in FIG. 10, the DMA registration and update processes shown in FIG. 11, the reproduction process shown in FIG. 14, and the like.

## Claims

1. An information storage medium **characterized by** comprising:
a user area (UA) to store user data;
a defect management area (DMA) to store defect information associated with defects on the user area; and
an overwrite management area (DMA) to store overwrite information associated with an overwrite count for the defect management area.

2. A medium according to claim 1, **characterized by** further comprising an auxiliary defect management area on which the defect information is replacement-recorded in accordance with the overwrite count indicated by the overwrite information.

3. A medium according to claim 1, **characterized by** further comprising an auxiliary defect management area on which the defect information is replacement-recorded in accordance with a defect generation state in the defect management area.

4. A medium according to any one of claims 1, 2, and 3, **characterized in that** the defect management area includes the overwrite management area.

5. A medium according to claim 1, **characterized in that** the defect management area includes a plurality of areas used to redundantly store a plurality of pieces of the defect information, and
the information storage medium comprises a plurality of auxiliary areas used to simultaneously replacement-record the plurality of pieces of defect information stored in the plurality of areas in accordance with the overwrite count indicated by the overwrite information.

6. A medium according to claim 1, **characterized in that** the defect management area includes a plurality of areas used to redundantly store a plurality of pieces of the defect information, and
the information storage medium comprises a plurality of auxiliary areas used to simultaneously replacement-record the plurality of pieces of defect information stored in the plurality of areas in accordance with a defect generation state in the defect management area.

7. An information recording apparatus for recording information on an information recording medium, which has a user area (UA) to store user data, a defect management area (DMA) to store defect information associated with defects on the user area, and an overwrite management area (DMA) to store overwrite information associated with an overwrite count for the defect management area, **characterized by** comprising:
a recording unit (4, 5, 6, 7, 8) to record the user data, the defect information, and the overwrite information; and
a recording control unit (20) to control the recording unit to record the defect information on the defect management area, and to record the overwrite information on the overwrite management area in correspondence with the recording operation.

8. An apparatus according to claim 7, **characterized by** further comprising a replacement-recording unit (20) to replacement-record the defect information on an auxiliary defect management area in accordance with the overwrite count indicated by the overwrite information.

9. An apparatus according to claim 7, **characterized by** further comprising a replacement-recording unit (20) to replacement-record the defect information on an auxiliary defect management area in accordance with a defect generation state on the defect management area.

10. An apparatus according to any one of claims 7, 8, and 9, **characterized in that** the recording unit controlled by the recording control unit records the overwrite information on the overwrite management area included in the defect management area.

11. An apparatus according to claim 7, **characterized in that** the recording unit controlled by the recording control unit redundantly records a plurality of pieces of the defect information on a plurality of areas included in the defect management area, and
the information recording apparatus comprises a replacement-recording unit to replacement-record the plurality of pieces of defect information recorded on the plurality of areas to a plurality of auxiliary areas in accordance with the overwrite count indicated by the overwrite information.

12. An apparatus according to claim 7, **characterized in that** the recording Unit controlled by the recording control unit redundantly records a plurality of pieces of the defect information on a plurality of areas included in the defect management area, and
the information recording apparatus comprises a replacement-recording unit to replacement-record the plurality of pieces of defect information recorded on the plurality of areas to a plurality of auxiliary areas in accordance with a defect generation state on the defect management area.

13. An information recording method for recording information on an information recording medium, which has a user area (UA) to store user data,
a defect management area (DMA) to store defect information associated with defects on the user area, and an overwrite management area (DMA) to store overwrite information associated with an overwrite count for the defect management area, **characterized by** comprising:
recording (ST2) the defect information on the defect management area, and recording (ST2) the overwrite information on the overwrite management area in correspondence with the recording operation.

14. A method according to claim 13, **characterized by** further comprising replacement-recording (ST31, ST35) the defect information on an auxiliary defect management area in accordance with the overwrite count indicated by the overwrite information.

15. A method according to claim 13, **characterized by** further comprising replacement-recording (ST32, ST35) the defect information on an auxiliary defect management area in accordance with a defect generation state on the defect management area.

16. A method according to any one of claims 13, 14, and 15, **characterized by** further comprising recording (ST2) the overwrite information on the overwrite management area included in the defect management area.

17. A method according to claim 13, **characterized by** further comprising:
redundantly recording (ST2) a plurality of pieces of the defect information on a plurality of areas included in the defect management area; and
replacement-recording (ST31, ST35) the plurality of pieces of defect information recorded on the plurality of areas to a plurality of auxiliary areas in accordance with the overwrite count indicated by the overwrite information.

18. A method according to claim 13, **characterized by** further comprising:
redundantly recording (ST2) a plurality of pieces of the defect information on a plurality of areas included in the defect management area; and
replacement-recording (ST32, ST35) the plurality of pieces of defect information recorded on the plurality of areas to a plurality of auxiliary areas in accordance with a defect generation state on the defect management area.
